(19) Europäisches Patentamt
European Patent Office
Office européen des brevets

(11) Veröffentlichungsnummer: **0 020 963**
**A2**

# (12) EUROPÄISCHE PATENTANMELDUNG

(21) Anmeldenummer: **80102508.1**

(22) Anmeldetag: **08.05.80**

(51) Int. Cl.³: **C 01 B 17/79**

(30) Priorität: **31.05.79 DE 2922116**

(43) Veröffentlichungstag der Anmeldung: **07.01.81**
**Patentblatt 81/1**

(84) Benannte Vertragsstaaten: **AT BE CH DE FR GB IT LI LU NL SE**

(71) Anmelder: **BASF Aktiengesellschaft,**
**Carl-Bosch-Strasse 38, D-6700 Ludwigshafen (DE)**

(72) Erfinder: **Laurer, Peter Rudolf, Dr., Freinsheimer Strasse 33, D-6700 Ludwigshafen (DE)**
Erfinder: **Becker, Hans-Juergen, Dr., Raiffeisenstrasse 10, D-6701 Goennheim (DE)**

## (54) Verfahren und Katalysatoren zur Oxidation von Schwefeldioxid.

(57) Die Oxidation von Schwefeldioxid zu Schwefeltrioxid wird in Gegenwart von Katalysatoren durchgeführt, die aus einem Träger auf Basis von Kieselsäure und darauf aufgebrachter aktiver Substanz, enthaltend Vanadium- und Alkalimetallverbindungen, besteht. Zwecks Erhöhung der Staubaufnahmefähigkeit einer Katalysatorschüttung weist der Katalysator einen sternförmigen Querschnitt mit 4 bis 6 Zacken auf.

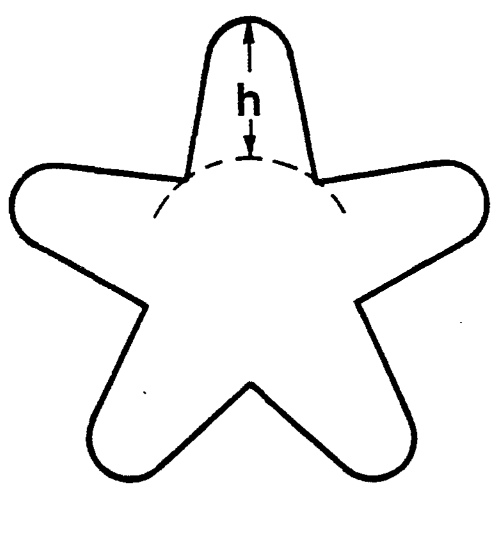


EP 0 020 963 A2

BASF Aktiengesellschaft 

**BEZEICHNUNG GEÄNDERT siehe Titelseite**

## Verfahren zur Oxidation von Schwefeldioxid

Vorliegende Erfindung betrifft ein Verfahren zur Oxidation von Schwefeldioxid zu Schwefeltrioxid unter Verwendung eines Katalysators auf Basis von Kieselsäure und darauf aufgebrachter aktiver Substanz enthaltend Vanadium- und Alkalimetallverbindungen für die Oxidation von Schwefeldioxid zu Schwefeltrioxid.

Für die Oxidation von $SO_2$ zu $SO_3$ werden Katalysatoren verwendet, die aus einem Trägermaterial, im allgemeinen synthetische oder natürliche Kieselsäure und darauf aufgebrachten katalytisch aktiven Massen bestehen. Im allgemeinen enthalten diese Katalysatoren neben 3 bis 10 Gew.% $V_2O_5$ noch 8 bis 15 Gew.% $K_2O$ und gegebenenfalls 0 bis 3 Gew.% $Na_2O$ in Form der Sulfate.

Neben der chemischen Zusammensetzung sind die physikalischen Eigenschaften der Katalysatoren für ihre Aktivität entscheidend. Die bekannten Katalysatoren werden zumeist als zylinderförmige Formkörper, als Extrudate oder Tabletten, gelegentlich auch als Kugeln hergestellt.

Zur Erhöhung der Aktivität strebt man Katalysatorteilchen mit möglichst kleinem Durchmesser an, die jedoch hohen Druckverlust besitzen und mechanisch sehr empfindlich sind. Um diese Nachteile zu vermeiden, sind bereits in der US-PS 2 408 164 Katalysatorformen vorgeschlagen worden, die eine größere geometrische Oberfläche gegenüber dem zylindrischen Strang besitzen. Dieses Patent ist jedoch auf Friedel-Krafts-Katalysatoren beschränkt. In der US-PS 3 674 680 werden sehr kleine Katalysatorteilchen, die von der Zylinderform abweichen, beschrieben. Für sie

Ki/Fe

gilt, daß alle Punkte im Katalysatorinnern weniger als 0,38 mm von der Oberfläche entfernt liegen und ein Oberflächen- zu Volumen-Verhältnis von 40 bis 100 $cm^{-1}$ besitzen sollen. Derartige Katalysatoren sind jedoch mechanisch äußerst empfindlich, haben hohen Druckverlust und sind technisch kaum herstellbar. Schließlich wird in der DE-OS 22 54 330 ein Katalysator mit mehrlappigem Querschnitt beschrieben, für den ebenfalls das Verhältnis von Oberfläche zu Volumen gegenüber einem Zylinderstrang mit gleichem Außendurchmesser stark erhöht ist.

Die genannten Vorschläge zur Erhöhung der Katalysatoroberfläche durch eine von der zylindrischen Form abweichende Formgebung beziehen sich auf petrochemische Umsetzungen oder auf Friedel-Krafts-Synthesen.

Bei der katalytischen Oxidation von Schwefeldioxid, die in der Gasphase durchgeführt wird, besteht das Problem, daß die $SO_2$-haltigen Gase stets Staub enthalten, der bei der mehrstufigen Umsetzung sich vornehmlich in der ersten Katalysatorschicht ablagert. Da die Umsetzung drucklos durchgeführt wird und die umzusetzenden Gase allenfalls einen geringen Vordruck aufweisen, um den Druckabfall in den einzelnen Stufen zu kompensieren, fällt der Gasdurchsatz mit zunehmender Staubbeladung, insbesondere der ersten Katalysatorschicht, stark ab. Aus diesem Grunde muß der Katalysator in regelmäßigen Zeitabständen ausgebaut und von dem ihm anhaftenden Staub befreit werden. In den meisten Fällen ist dieser Katalysator noch so aktiv, daß er nach Ergänzung durch frischen Katalysator wieder eingesetzt werden kann.

Nachteilig bei den eingangs beschriebenen Katalysatorformen, insbesondere den in der DE-OS 22 54 330 beschriebenen Formen ist, daß das Lückenvolumen, das für die Staubaufnahmefähigkeit und den Druckverlust maßgeblich ist, nicht wesentlich höher liegt als bei normalen Zylindersträngen.

Das Lückenvolumen ist definiert durch

$$\varepsilon = \frac{V - V_k \cdot n_k}{V}$$

$\varepsilon$ Lückenvolumen
$V$ Gesamtvolumen der Schüttung
$V_k$ Volumen eines Katalysatorpartikel
$n_k$ Zahl der Katalysatorpartikel im Gesamtvolumen der Schüttung

Bei Hohlzylindern ist nachteilig, daß der Hohlraum durch querliegende Partikel ganz oder teilweise verschlossen sein kann und die Gasströmung dadurch unterbrochen und die Staubaufnahmefähigkeit vermindert wird.

Der vorliegenden Erfindung lag daher die Aufgabe zugrunde, die Oxidation von Schwefeldioxid zu Schwefeltrioxid unter Verwendung von Katalysatoren, die aus einem Träger auf Basis von Kieselsäure und darauf aufgebrachter aktiver Substanz enthaltend Vanadium- und Alkalimetallverbindungen bestehen, so zu führen, daß die oben geschilderten Nachteile, die insbesondere auf den Staubgehalt der zu verarbeitenden Gase zurückzuführen sind, nicht auftreten.

Es wurde gefunden, daß diese Aufgabe dadurch gelöst werden kann, daß der Katalysator aus Strängen mit sternförmigem Querschnitt mit 4 bis 6 Zacken besteht.

Die Katalysatoren aus einem Strang mit sternfömigem Querschnitt haben in der Regel einen inneren Durchmesser von 3

bis 6 mm, einen äußeren Durchmesser von 5 bis 10 mm, mit der Maßgabe, daß die Höhe (h) der Zacken, gemessen vom inneren Durchmesser (vgl. Figur) 1 bis 3 mm beträgt. Die Länge der Stränge beträgt 4 bis 8 mm.

Da die Katalysatoren mit sternförmigem Querschnitt naturgemäß mechanisch empfindlicher sind als zylinderförmige Katalysatoren, kommt es bei der Herstellung besonders abriebfester Katalysatoren, die gleichzeitig eine hohe Aktivität aufweisen, sehr auf die Herstellungsbedingungen an. Gemäß einem weiteren Merkmal der Erfindung sind die Katalysatoren besonders abriebfest, wenn man

a) Vanadiumpentoxid in solchen Mengen von wässerigen Lösungen von Kaliumhydroxid löst, daß das Molverhältnis in der Lösung $V_2O_5:K_2O$ von 0,2 bis 0,8 beträgt,

b) die erhaltene Lösung mit Schwefelsäure auf einen pH-Wert $< 4$ ansäuert, und die erhaltene Suspension

c) unmittelbar anschließend mit einem Träger auf Basis von Kieselsäure zu einer pastösen Masse verarbeitet, mit der Maßgabe, daß das Molverhältnis $SiO_2:V_2O_5$ von 13,0 bis 45,0 beträgt,

d) die Masse durch Strangpressen zu Strängen mit sternförmigem Querschnitt verformt, zerkleinert und trocknet und

e) bei Temperaturen von 450 bis 650°C tempert.

Wesentlich ist, daß die in a) erhaltene Lösung mit soviel Schwefelsäure versetzt wird, daß eine saure Suspension mit einem pH-Wert $< 4$ erzielt wird, und daß die erhaltene saure Suspension unmittelbar anschließend mit dem Träger auf Basis Kieselsäure verarbeitet wird.

Zum Lösen des Vanadiumpentoxides setzt man zweckmäßig möglichst konzentrierte wässerige Lösungen von Kaliumhydroxid ein, z.B. mit Konzentrationen von 40 bis 50 Gew.%. Die Lösungen werden mit Schwefelsäure angesäuert, deren Konzentration beispielsweise 20 bis 40 Gew.% beträgt. Durch die Neutralisationswärme wird das Reaktionsgemisch in erwünschter Weise auf 50 bis 100°C erwärmt.

Als Träger auf Basis von Kieselsäure setzt man vorzugsweise amorphe Kieselsäuren, z.B. Kieselgur oder synthetisch hergestelltes Kieselgel ein.

Arbeitet man in den oben genannten Konzentrationsbereichen bei der Herstellung der Suspensionen, so erhält man bei der Einarbeitung von amorpher Kieselsäure eine pastöse Masse, die sofort durch Verformen, z.B. Extrudieren, weiter verarbeitet werden kann.

Es ist zweckmäßig, nach dem Einarbeiten der Kieselsäure der Masse noch eine geringe Menge, z.B. 2 bis 4 Gew.% eines Feststoffes zuzusetzen, der bei der nachfolgenden Temperung sich rückstandslos verflüchtigt bzw. zersetzt, z.B. hochpolymere organische Stoffe oder Schwefel.

Nach dem Verkneten wird die Masse, z.B. durch Extrudieren, zu Strängen mit sternförmigem Querschnitt verformt, die Stränge zerkleinert, bei 100 bis 150°C getrocknet und dann bei 450 bis 650°C getempert. Die Temperbehandlung beträgt in der Regel 30 bis 120 Minuten.

Zum Lösen des Vanadiumpentoxides kann man auch anstelle von Kalilauge Gemische von Kalilauge und Natronlauge einsetzen. Die Natronlauge kann in solchen Mengen eingesetzt werden, daß das Molverhältnis $V_2O_5:Na_2O$ bis zu 0,15 beträgt. Durch die zugesetzte Natronlauge wird die Kalilauge ersetzt.

Beispiel

Die eingesetzten Katalysatoren werden durch Verkneten und anschließendes Formen einer Mischung aus Kieselsäurepulver, Vanadinsäure, Kaliumhydroxid und Schwefelsäure sowie anschließendes Trocknen und Kalzinieren im einzelnen wie folgt hergestellt:

In einem 400 l-Kneter werden 184 kg Kieselgur mit einer Suspension verknetet, die durch Zugabe von 13,64 kg Vanadinoxid (74,9 Mol) zu 29 kg KOH (516,8 Mol) als 48 gew.%-ige wäßrige Lösung und anschließendem Ansäuern mit 33 gew.%iger Schwefelsäure bis zu einem pH von ~ 1 hergestellt wurde. Nach Erhalt einer homogenen Mischung wird diese je zur Hälfte zu 6 mm Zylindersträngen und zur Hälfte zu erfindungsgemäßen Sternsträngen mit 5 Zacken und einem äußeren Durchmesser von 6 mm (Umkreis um die Zacken) und einem inneren Durchmesser von 3,5 mm (Durchmesser des inneren Kernes) wie in der Figur gezeigt, extrudiert. Anschließend wird bei 130°C getrocknet und bei 600°C getempert.

Die Katalysatoren haben folgende Eigenschaften:

Vanadium-Katalysatoren zur Oxidation von $SO_2$

| | Zylinderstrang | Sternstrang |
|---|---|---|
| Litergewicht (g/l) | 630 | 470 |
| Lückenvolumen ... %/100 | 0,42 | 0,57 |
| Schneidhärte N | 78 | 60 |
| Abrieb Gew.% | 0,8 | 1,6 |
| $SO_2$-Umsatz bei 410°C % d.Th. | 89,9 % | 89,4 % |
| Druckverlust mb/m bei 1 m/sec Gasgeschwindigkeit | 49 | 14,7 |

Es war überraschend und nicht vorherzusehen, daß bei der Schwefeldioxid-Oxidation in der Gasphase ein Sternkatalysator eine um 34 % höhere Gewichtsaktivität gegenüber einem Zylinderstrang gleicher Zusammensetzung hat.

Weitere Vorteile des erfindungsgemäßen Sternkatalysators sind der bei Schwefelsäureanlagen sehr wichtige niedrige Druckverlust, der erhebliche Energieeinsparung ermöglicht, und das um 37 % höhere Lückenvolumen, das die Staubaufnahmefähigkeit der Katalysatorschüttung vergrößert und damit längere Laufzeiten ohne zwischenzeitlichen Ausbau und Absieben des Katalysators zuläßt.

Die in der obigen Tabelle angegebenen Werte für die Schneidehärte, den Abrieb als Maß für mechanische Eigenschaften und für die Porosität als Maß für katalytische Eigenschaften werden wie folgt bestimmt:

a) Bestimmung der Schneidehärte

An einer abwärts fahrbaren Traverse ist ein Stempel mit angesetzter 0,3 mm-Schneide befestigt. Die Traverse wird mittels Elektromotor mit einer konstanten Geschwindigkeit von 14 mm/Minute nach unten bewegt und die Schneide senkrecht

zur Längsachse eines Strangpreßlings aufsetzen gelassen. Mittels eines Dehnungsmeßstreifens wird die Kraft gemessen, die zur Durchtrennung des Strangpreßlings erforderlich ist.

Insgesamt werden 25 Strangpreßlinge mit der Schneide durchgetrennt und die Kraft registriert und gemittelt.

b) Bestimmung des Abriebes

Die Probe wird über ein 2 mm-Sieb abgesiebt. 100 g werden in einen 1-Liter-Behälter eingewogen. Dazu werden 30 g Porzellankugeln (10 bis 11 mm Durchmesser, 1,7 bis 2,0 g Gewicht) gegeben. Der Behälter wird verschlossen und 2 Stunden auf einer Schwingmühle mit 1.400 Umdrehungen/Minute bewegt. Der Katalysator wird danach über ein 2 mm-Sieb abgesiebt. Der Gewichtsunterschied ergibt den Abrieb.

c) Bestimmung der Porosität

20 g der Probe werden in einem 100 ml Becherglas mit Toluol überschichtet und mit einem Uhrglas abgedeckt. Nach 10 bis 15 Minuten wird das Toluol abgegossen und die Probe zurückgewogen.

$$\text{Porosität in } cm^3/g = \frac{(\text{Gewicht der feuchten Probe} - 20) \times 5}{100 \times 0{,}86}$$

Patentansprüche

1. Verfahren zur Oxidation von Schwefeldioxid zu Schwefeltrioxid unter Verwendung von Katalysatoren, die aus einem Träger auf Basis von Kieselsäure und darauf aufgebrachter aktiver Substanz enthaltend Vanadium- und Alkalimetallverbindungen bestehen, dadurch gekennzeichnet, daß der Katalysator aus Strängen mit sternförmigem Querschnitt mit 4 bis 6 Zacken besteht.

2. Verfahren nach Anspruch 1, dadurch gekennzeichnet, daß der Strang mit sternförmigem Querschnitt einen inneren Durchmesser von 3 bis 6 mm und einen äußeren Durchmesser von 5 bis 10 mm aufweist, mit der Maßgabe, daß die Höhe der Zacken 1 bis 3 mm beträgt.

3. Katalysatoren mit Trägern auf Basis von Kieselsäure und darauf aufgebrachten aktiven Substanzen enthaltend Vanadium- und Alkalimetallverbindungen, dadurch gekennzeichnet, daß sie aus Strängen mit sternförmigem Querschnitt mit 4 bis 6 Zacken bestehen und erhalten worden sind, indem man

a) Vanadiumpentoxid in solchen Mengen von wässerigen Lösungen von Kaliumhydroxid löst, daß das Molverhältnis in der Lösung $V_2O_5:K_2O$ von 0,2 bis 0,8 beträgt,

b) die erhaltene Lösung mit Schwefelsäure auf einen pH-Wert < 4 ansäuert, und die erhaltene Suspension

c) unmittelbar anschließend mit einem Träger auf Basis von Kieselsäure zu einer pastösen Masse verarbeitet, mit der Maßgabe, daß das Molverhältnis $SiO_2:V_2O_5$ von 13,0 bis 45,0 beträgt,

d) die Masse zu Strängen mit sternförmigem Querschnitt verformt, trocknet und

e) bei Temperaturen von 450 bis 650°C tempert.

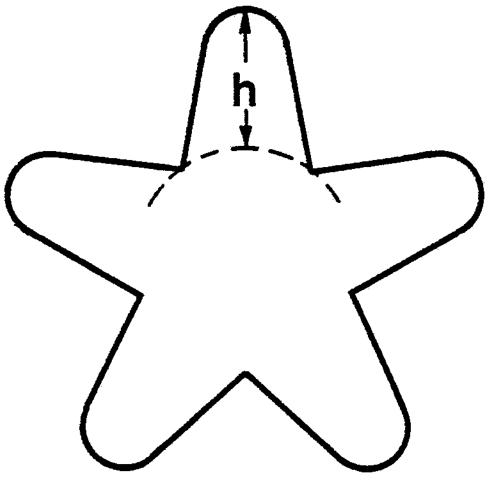
h